# EUROPÄISCHE PATENTSCHRIFT

(11) **EP 2 622 400 B1**
(45) Veröffentlichungstag und Bekanntmachung des Hinweises auf die Patenterteilung: **29.08.2018**
(21) Anmeldenummer: 11760751.5
(22) Anmeldetag: 15.09.2011
(51) Int. Cl.: G02B 27/09, B23K 26/067, B23K 26/06, B23K 26/073, G02B 5/18

(54) **ANORDNUNG UND VERFAHREN ZUR ERZEUGUNG EINES LICHTSTRAHLES FÜR DIE MATERIALBEARBEITUNG**
ARRANGEMENT AND METHOD FOR GENERATING A LIGHT BEAM FOR MATERIAL PROCESSING
SYSTÈME ET PROCÉDÉ POUR GÉNÉRER UN FAISCEAU DE LUMIÈRE POUR L'USINAGE DE MATÉRIAUX

(30) Priorität: 27.09.2010 DE 102010046167
(43) Veröffentlichungstag der Anmeldung: 07.08.2013
(73) Patentinhaber: JENOPTIK Optical Systems GmbH, 07745 Jena (DE)
(72) Erfinder: SCHREINER, Roland, 07768 Orlamünde (DE); WIELSCH, Uwe, 12555 Berlin (DE); GNAUSCH, Tobias, 99974 Mühlhausen (DE); SCHWEIZER, Hagen, 07926 Gefell (DE)
(74) Vertreter: Waldauf, Alexander
(86) Internationale Anmeldenummer: PCT/EP2011/065991
(87) Internationale Veröffentlichungsnummer: WO 2012/041711

(56) Entgegenhaltungen:
- EP-A2- 1 803 522
- DE-A1-102008 033 358
- US-A1- 2002 021 723

## Beschreibung

Die vorliegende Erfindung betrifft eine Anordnung zur Erzeugung eines Lichtstrahles für die Materialbearbeitung gemäß dem Oberbegriff des Anspruchs 1 sowie ein Verfahren zur Erzeugung eines Lichtstrahles für die Materialbearbeitung gemäß dem Oberbegriff des Anspruchs 13. Mit einer solchen Anordnung und einem solchen Verfahren kann aus dem Lichtstrahl ein strukturierter Linienfokus zur Materialbearbeitung erzeugt werden.

Ein Lichtstrahl, vorzugsweise ein Laserstrahl, kann durch eine Strahlaufweitungs- und Strahlformungsoptik in einen Linienfokus umgewandelt werden. Der Linienfokus ist üblicherweise charakterisiert durch eine definierte Breite und Länge und einer in diesen geometrischen Grenzen definierten kontinuierlichen Intensitätsverteilung. Um mit diesem homogenen Intensitätsprofil eine Struktur in der gewünschten Bildebene zu erzeugen, wird der Strahl bisher durch eine strukturierte Maske geführt und anschließend durch ein Projektionsobjektiv in die Bildebene abgebildet. Nachteilig ist hierbei der hohe Leistungsverlust in der Maskenebene sowie die zusätzliche Baulänge durch das Projektionsobjektiv.

Gemäß dem Stand der Technik kann ein Linienfokus durch ein so genanntes Diffusorprinzip oder ein so genanntes Strahlformer-Prinzip erzeugt werden.

Beim Diffusorprinzip wird ein Laserstrahl mit ausreichenden Kohärenzeigenschaften durch eine Kollimatoroptik auf den für die weitere Strahlformung benötigten Durchmesser gebracht. Anschließend wird der Laserstrahl durch eine Fokussierlinse erneut gebündelt. Der Linienfokus wird durch einen Diffusor erzeugt, der üblicherweise in kurzem Abstand zur Fokussierlinse steht. Der Diffusor, in der Bauausführung als diffraktives optisches Element (DOE), formt durch Beugung an diffraktiven Strukturen die gewünschte Intensitätsverteilung im Fernfeld, zum Beispiel einen Linienfokus. Charakteristisch für den Diffusor ist es, das jeder Teilbereich des Diffusors bereits die Fernfeldverteilung erzeugt. Alle Teilbereiche des Diffusors überlagern sich in der Bildebene und bilden zusammen den Linienfokus. Diese Methode ist vorteilhaft aufgrund der Unempfindlichkeit gegen Justagefehler und Schwankung der Beleuchtungsparameter. Nachteilig ist allerdings das Auftreten von Speckle. Dieser unvermeidliche Effekt führt zu starken Intensitätsschwankungen im Linienfokus und ist deshalb in der Praxis für Anwendungen mit hohen Homogenitätsforderungen nicht anwendbar.

Beim Strahlformer-Prinzip umfaßt ein Strahlformer eine Lichtquelle (kohärente Laserstrahlung), einen Kollimator, eine Fokussierlinse und ein DOE. Das diffraktive Element (DOE) befindet sich in der Nähe der Fokussierlinse, hat aber eine zum Diffusorprinzip unterschiedliche Funktionsweise. Beim Strahlformer-Prinzip formt die gesamte DOE-Fläche den Linienfokus. Das heißt, eine bestimmte Stelle auf dem DOE ist genau einem Ort im Linienfokus zugeordnet. Ist ein Teilbereich des DOEs abgedeckt oder beschädigt, so zeigt sich dieser Defekt auch in der Linie. Der Strahlformer erzeugt aber keinerlei Speckle, was prinzipiell zu guter Linienhomogenität führt. Die Nachteile der empfindlichen Justage und die Anfälligkeit gegen Lichtquellenschwankungen werden oft zu Gunsten der guten Homogenität in Kauf genommen. Die exakten Justagemöglichkeiten muß durch eine geeignete Mechanikkonstruktion bereitgestellt werden. Zudem gibt es in der Zwischenzeit moderne Laser-Lichtquellen, die stabil genug sind, um eine stabile Strahlformung mit DOE zu gewährleisten.

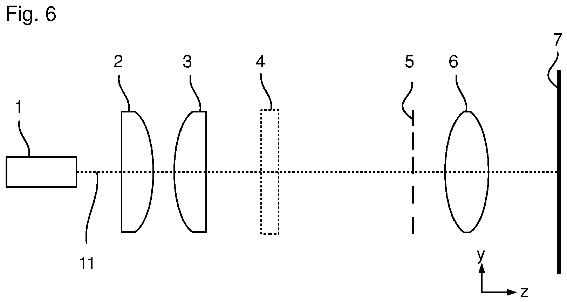

Figur 6 zeigt eine Anordnung zur Erzeugung eines strukturierten Linienfokus, wie sie Stand der Technik ist, mit einem Laser 1, einer Kollimatorlinse 2, einer Fokussierlinse 3, einem Diffusor oder Strahlformer 4, einer Maske 5 und einer Projektionsoptik 6. Bei dieser Anordnung wird der Linienfokus mittels der Maske 5 strukturiert, wobei der Maske 5 die Projektionsoptik 6 nachgeschaltet ist, die ihrerseits ein Bild der beleuchteten Maske 5 in einer Bildebene 7 erzeugt.

Diese Anordnung hat jedoch den Nachteil, daß Licht in der Maskenebene verloren geht und nicht mehr in der Bildebene für den Bearbeitungsprozeß zur Verfügung steht. Die Anordnung wird damit ineffizient.

Aufgabe der vorliegenden Erfindung ist es, eine Anordnung der eingangs genannten Art und ein Verfahren der eingangs genannten Art so weiter zu bilden, daß die oben genannten Nachteile möglichst vermieden werden können.

Die Aufgabe wird bei einer Anordnung zur Erzeugung eines Lichtstrahles für die Materialbearbeitung der eingangs genannten Art dadurch gelöst, daß die Strahlformungsoptik zur Erzeugung der Zielstrukturierung eine Strahlteilerfunktion aufweist.

Dadurch kann die gewünschte Strukturierung in der Bearbeitungsebene durch die Strahlformungsoptik selbst erfolgen, wodurch die Lichtausbeute in der Bearbeitungsebene maximiert werden kann. Auch ist ein platzsparender Aufbau möglich, da keine Projektionsoptik notwendig ist.

Bei der erfindungsgemäßen Anordnung kann die Strahlformungsoptik als vorbestimmte Zielstrukturierung einen Linienfokus erzeugen, der in seiner Längsrichtung intensitätsstrukturiert ist. Erfindungsgemäß ist aufgrund der Intensitätsstrukturierung der Linienfokus in seiner Längsrichtung lokal unterbrochen. Ein solcher Linienfokus kann z. B. bei der Herstellung von OLED-Displays zur Anwendung kommen. So kann z. B. mittels dem strukturierten Linienfokus ein lokaler Umschmelzprozeß in Gang gesetzt werden, der die organischen OLED-Materialien von einer Trägerfolie auf das Displaysubstrat überträgt.

Der Linienfokus kann z. B. entlang der schmalen Richtung (also quer zur Längsrichtung) über das zu bearbeitende Teil geführt werden. Aufgrund der erreichbaren hohen Leistungsdichte im Linienfokus kann der scannende Bearbeitungsprozeß schnell und effizient erfolgen.

Die erzeugten Strukturen können in einer Größenordung von weniger als 10 µm liegen, wodurch die Herstellung von kleinen aber hoch auflösenden Displays für z. B. mobile Geräte (Handys, Smartphones, PDAs, Tablet-PCs, etc.) ermöglicht ist. Mit der erfindungsgemäßen Anordnung können bei OLED-Displays nun ähnlich gute Auflösungen erzielt werden wie bei klassischen LCD-Displays.

Bei der erfindungsgemäßen Anordnung kann die Strahlformungsoptik ein erstes diffraktives optisches Element zur Verwirklichung der Strahlteilerfunktion aufweisen. Damit ist es z. B. möglich, eine mittels der Strahlformungsoptik erzeugte Einzelstruktur mit Hilfe des ersten diffraktiven optischen Elementes in mehrere Einzelstrukturen aufzuteilen und zu einer strukturierten Linie (z. B. ein intensitätsstrukturierter Linienfokus) zusammenzusetzen.

Das erste diffraktive optische Element kann beispielsweise als Phasenmaske ausgebildet sein. Die Phasenmaske kann als mehrstufige Phasenmaske hergestellt sein. Durch die Ausbildung als Phasenmaske findet im Gegensatz zur sogenannten Amplituden-DOEs, welche lokal das Licht an undurchsichtigen Mikrostrukturen absorbieren oder reflektieren, kein Lichtverlust statt. In erster Näherung wird bei einer Phasenmaske alles eintreffende Licht verwendet und geformt. Als weiterer Vorteil entsteht durch die äußerst geringe Absorption keine wesentliche Erwärmung des ersten diffraktiven optischen Elementes. Um das unerwünschte Streulicht in den höheren Beugungsordnungen des ersten diffraktiven Elementes zu verringern und möglichst viel in die gewünschte Beugungsordnung zu leiten, kann das diffraktive optische Element mehrstufig ausgeführt werden. So können z. B. bis zu acht Stufen verwendet werden, womit sich eine theoretische Beugungseffizienz von 81 % für die zur Strahlformung benutzte erste Beugungsordnung erzielen läßt.

Bei der erfindungsgemäßen Anordnung kann die Strahlformungsoptik neben der Strahlteilerfunktion eine strahlformende Funktion aufweisen. Insbesondere kann die strahlformende Funktion durch ein zweites diffraktives optisches Element verwirklicht sein. Mit dem zweiten diffraktiven optischen Element kann somit z. B. die Einzelstruktur geformt werden, die dann mittels dem dem zweiten diffraktiven optischen Element nachgeordneten ersten diffraktiven optischen Element aufgeteilt werden kann, um die vorbestimmte Zielstrukturierung zu erzeugen.

Bei der erfindungsgemäßen Anordnung können somit das erste und das zweite diffraktive optische Element zwei separate diffraktive optische Elemente sein. Es ist jedoch auch möglich, daß die beiden diffraktiven optischen Elemente als ein einziges optisches diffraktives Element ausgebildet sind.

Ferner kann bei der erfindungsgemäßen Anordnung die Strahlformungsoptik eine der Lichtquelle nachgeordnete Kollimatoreinheit und eine der Kollimatoreinheit nachgeordnete Strahlaufbereitungseinheit aufweisen, wobei die Strahlaufbereitungseinheit die Strahlteilerfunktion sowie eine strahlformende Funktion und eine gegebenenfalls notwendige fokussierende Funktion aufweist.

Die Strahlaufbereitungseinheit kann aus einer Fokussiereinheit, einer Strahlformungseinheit und einer Strahlteilereinheit bestehen.

Bei der erfindungsgemäßen Anordnung ist somit die Strahlformungsoptik so gestaltet, daß die Strukturierung in der Bildebene bereits durch die Strahlformungsoptik selbst erfolgt, um somit ein Maximum der Lichtausbeute in der Bearbeitungsebene zu schaffen. Dadurch kann ein intensitätsstrukturierter Linienfokus auf die Bearbeitungsebene abgebildet werden, der eine hohe Lichtintensität aufweist.

Im Sinne der vorliegenden Erfindung versteht der Anmelder unter einem intensitätsstrukturiertem Linienfokus z. B. eine derartige Intensitätsverteilung der Lichtstrahlung (Zielstrukturierung), die entsprechend der Lichtquelle ein Optimum einer Lichtausbeute erzeugt, die für den jeweiligen Laserbearbeitungsprozeß notwendig ist. Ein nach der erfinderischen Anordnung generierter intensitätsstrukturierter Linienfokus der bereits bei der Strahlformung erzeugt wird, erhöht die Lichtausbeute und damit die Effizienz der Lichtstrahlung.

Vorzugsweise ist die Lichtquelle als kohärente Lichtquelle ausgebildet und kann z. B. ein Single Mode Laser (wie z. B. ein Faserlaser) sein. In weiteren Ausführungsformen der Erfindung kann diese kohärente Lichtquelle aber beispielsweise auch eine Multi-Mode-Lichtquelle oder eine alternative Lichtquelle sein, die durch geeignete Maßnahmen, wie Wellenlängenfilterung oder ähnliche Filtermaßnahmen, einen ausreichend formbaren kohärenten Lichtstrahl im Sinne der Aufgabe der Erfindung erzeugt.

Als Kollimatoreinheit kann eine geeignete Kollimatorlinse verwendet werden.

In einer besonderen Ausführung der Erfindung besteht die Strahlaufbereitungseinheit dreiteilig aus einer Fokussiereinheit, z. B. eine Fokussierlinse, einer Strahlformungseinheit und einer Strahlteilereinheit. Die Strahlformungseinheit und die Strahlteilereinheit sind jeweilig entsprechend unterschiedlich gestaltete DOE's. In einer weiteren Ausführungsform kann ein multifunktionales DOE verwendet werden, das sowohl Strahlformungseigenschaften als auch Strahlungsteilereigenschaften besitzt. Hierbei wird in das strahlformende DOE eine zusätzliche Strahlteiler-Funktion eingebracht. Die technische Beschränkung hierbei ist nur die Strukturierbarkeit (kleinste Strukturbreite) des DOE's.

Die Aufgabe wird bei einem Verfahren der eingangs genannten Art dadurch gelöst, daß die Lichtstrahlung vor der Bearbeitungsebene noch so geteilt wird, daß ein Lichtstrahl mit einer vorbestimmten Zielstrukturierung auf die Bearbeitungsebene trifft.

Ferner kann vor der Formung der kollimierten Lichtstrahlung eine Fokussierung durchgeführt werden.

Des weiteren können bei dem erfindungsgemäßen Verfahren einzelne diffraktive optische Elemente mit jeweils separater Strahlformungs- und Strahlteilerfunktion verwendet werden, die die Lichtstrahlung formen und anschließend teilen. Insbesondere kann eines der diffraktiven optischen Elemente zur Strahlformung eingesetzt werden und ein anderes der diffraktiven Elemente zur Strahlteilung eingesetzt werden. Besonders bevorzugt werden genau zwei diffraktive Elemente verwendet.

Alternativ ist es möglich, daß die Strahlformung sowie die Strahlteilung durch ein einziges multifunktionales diffraktives optisches Element verwirklicht wird.

Bei dem erfindungsgemäßen Verfahren kann mittels dem Lichtstrahl in der Bearbeitungsebene durch direkten Wärmeeintrag ein Umschmelzprozeß in einem zu bearbeitenden Teil durchgeführt werden.

Bei dem Umschmelzprozeß kann es sich z. B. um Löten, Kunststoffschweißen, eine Wärmebehandlung von Solarzellen (Annealing), etc. handeln.

Bei dem Verfahren kann insbesondere als vorbestimmte Zielstrukturierung ein Linienfokus erzeugt werden, der in seiner Längsrichtung intensitätsstrukturiert ist. Der Linienfokus kann quer zu seiner Längsrichtung relativ zum bearbeiteten Teil bewegt werden, um die gewünschte Bearbeitung, wie z. B. den Umschmelzprozeß, durchzuführen.

Es versteht sich, daß die vorstehend genannten und in die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen. Insbesondere kann die erfindungsgemäße Anordnung so weitergebildet werden, daß mit ihr das erfindungsgemäße Verfahren sowie die Weiterbildungen des erfindungsgemäßen Verfahrens ausgeführt werden können. Ferner kann das erfindungsgemäße Verfahren so weitergebildet werden, daß es die Verfahrensschritte der erfindungsgemäßen Anordnung sowie ihrer Weiterbildungen enthält.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine erste Ausführungsform der erfindungsgemäßen Anordnung zur Erzeugung eines Lichtstrahls für die Materialbearbeitung;
- Fig. 2: die Teilstruktur als Ergebnis der Strahlformung;
- Fig. 3: den durch Strahlformung und Strahlteilung erzeugten intensitätsstrukturierten Linienfokus;
- Fig. 4: eine schematische Darstellung der Ausbildung des Strahlteilers als Phasengitter;
- Fig. 5: eine zweite Ausführungsform der erfindungsgemäßen Anordnung, und
- Fig. 6: eine schematische Darstellung einer bekannten Anordnung zur Erzeugung eines Lichtstrahls für die Materialbearbeitung.

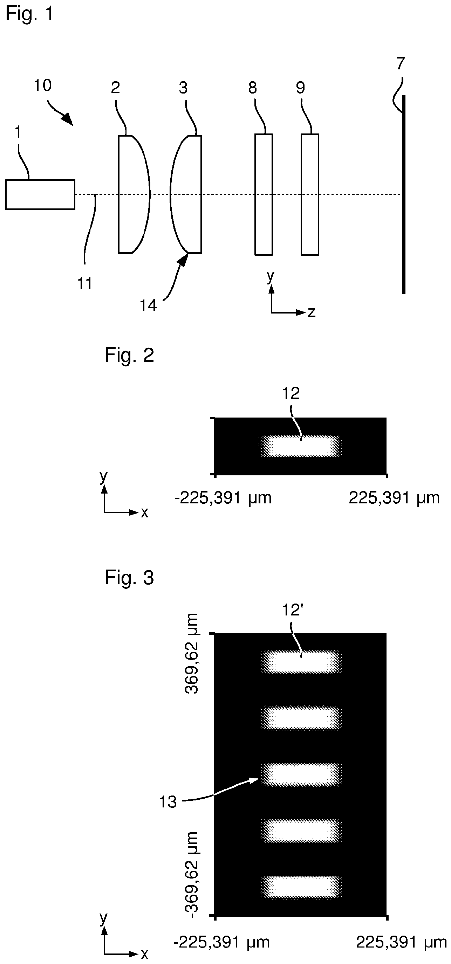

Bei der in Fig. 1 gezeigten Ausführungsform umfaßt die erfindungsgemäße Anordnung 10 zur Erzeugung eines strukturierten Linienfokus zur Materialbearbeitung eine Lichtquelle 1 (hier ein Faserlaser), die einen Laserstrahl mit einer Wellenlänge von 1070 nm mit einer Ausgangsleistung von bis zu 2 kW abgibt, dem in dieser Reihenfolge eine Kollimatorlinse 2, eine Fokussierlinse 3, ein Strahlformer 8 und ein Strahlteiler 9 nachgeordnet sind. Die Elemente 2, 3, 8 und 9 bilden zusammen eine Strahlformungsoptik 14.

Die von der Lichtquelle 1 abgegebene Laserstrahlung 11 wird durch die Kollimatorlinse 2 auf den für die weitere Strahlformung benötigten Durchmesser (z. B. ca. 100-120 mm) gebracht. Anschließend wird die Laserstrahlung 11 durch die Fokussierlinse 3 gebündelt, so daß in einer Bearbeitungsebene 7 die gewünschte Fokussierung vorliegt. Mittels dem Strahlformer 8 wird die Laserstrahlung vor der Bearbeitungsebene in eine gewünschte Teilstruktur 12 gebracht, die schematisch in Fig. 2 dargestellt ist. Die Darstellung ist in Fig. 2 so gewählt, daß die Intensitäten mittels einer Grauwertdarstellung gezeigt sind (je höher die Intensität ist, um so heller ist die Darstellung). Aus Fig. 2 kann somit entnommen werden, daß die Teilstruktur im wesentlichen rechteckförmig ist, wobei eine ausgezeichnete Homogenität in x- und y-Richtung vorliegt.

Der Strahlformer 8 ist hier als diffraktives optisches Element ausgebildet, wobei seine gesamte Fläche die Teilstruktur 12 formt. Somit ist eine bestimmte Stelle auf dem diffraktiven optischen Element 8 genau einem Ort in der Teilstruktur 12 zugeordnet. Daher erzeugt der Strahlformer 8 keinerlei Speckle, was prinzipiell zu einer sehr guten Homogenität führt.

Der dem Strahlformer 8 nachgeordnete Strahlteiler 9 teilt die Teilstruktur 12 in fünf Teilstrukturen 12' auf, die in Richtung der kurzen Seite der Teilstrukturen 12' voneinander beabstandet angeordnet sind, so daß der in Fig. 3 gezeigte intensitätsstrukturierte Linienfokus 13 in der Bildebene 7 vorliegt. Die Grauwertdarstellung der Intensitäten ist in Fig. 3 gleich wie in Fig. 2. Natürlich ist die Anzahl von fünf Teilstrukturen nur beispielhaft zu verstehen. So kann die Anzahl kleiner oder auch größer sein.

Der strukturierte Linienfokus 13 kann beispielsweise eine Länge (hier in y-Richtung) von 80 mm bei einer Breite (hier in x-Richtung) von 0,2 mm aufweisen. Dabei betragen die Intensitätsschwankungen (in den Teilstrukturen 12') entlang der langen Richtung (80 mm) weniger als 5 %, was einen gleichmäßigen und stabilen Bearbeitungsprozeß gewährleistet. Innerhalb des Linienfokus 13 herrschen typische Leistungsdichten von 10 kW/cm². Diese hohen Leistungsdichten sind dazu geeignet, durch direkten Wärmeeintrag Umschmelzprozesse durchzuführen, wie z. B. Löten, Kunststoffschweißen, Wärmebehandlung von Solarzellen (Annealing), etc.

Der erzeugte intensitätsstrukturierte Linienfokus 13 muß somit in vorteilhafter Weise durch keine weitere Maske abgeschnitten werden. Des weiteren ist keine Projektionsoptik mehr erforderlich, so daß die Baulänge der gesamten Anordnung 10 reduziert werden kann.

Weiterer Vorteil dieser Lösung ist die Lichteffizienz. Eine Laserquelle 1 geringerer Leistung reicht aus, um die gleiche Lichtleistung am Werkstück (Bearbeitungsebene 7) zu erzeugen.

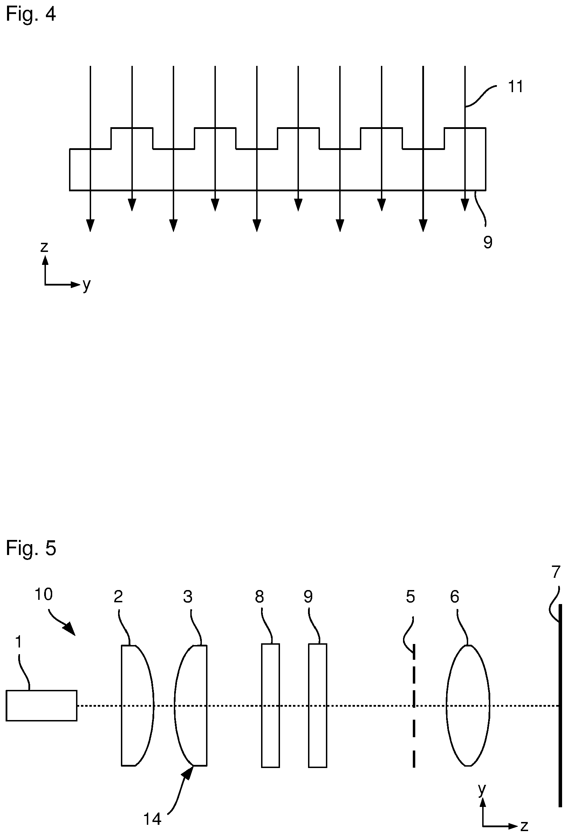

In Fig. 4 ist schematisch die Ausbildung des Strahlteilers 9 als Phasengitter bzw. Phasenmaske dargestellt. Hier ist eine Seite des Phasengitters 9 strukturiert, so daß das das Phasengitter durchstrahlende Licht 11 eine lokale Phasenmodulation (in y-Richtung) erfährt, wodurch der austretende Lichtstrahl in der Bearbeitungsebene 7 als strukturierter Linienfokus 13 ausgebildet ist. In Fig. 4 ist die Phasenmodulation durch das Phasengitter 9 schematisch durch die Länge der einzelnen Pfeile dargestellt.

Die beiden Gitter 8 und 9 können jeweils durch lithographische Methoden hergestellt werden, wie z. B. Elektronenstrahl- oder Laserstrukturierungslithographie. Als Material kann z. B. Quarz verwendet werden, wobei die Abmessungen in x- und y-Richtung an die jeweilige Anwendung angepaßt gewählt sind. Hier betragen die Abmessungen ca. 120 x 120 mm. Die Substratdicke für die jeweiligen diffraktiven optischen Elemente 8, 9 kann wenige Millimeter betragen. Bei dem diffraktiven optischen Element 9 können die kleinsten Strukturen 2 µm groß sein. Insbesondere müssen beide Phasengitter 8 und 9 nicht nur zweistufig sein, wie in Fig. 9 gezeigt, sondern können auch mehr als zwei Stufen umfassen. In der Praxis sind z. B. bis zu acht Stufen üblich. Damit kann eine Optimierung der theoretischen Beugungseffizienz der genützten Beugungsordnung (beispielsweise der ersten Beugungsordnung) von bis zu 81 % erreicht werden und die unerwünschten Beugungen höherer Beugungsordnungen entsprechend verringert werden.

Der Abstand der Bearbeitungsebene 7 vom diffraktiven optischen Element 9 kann mehrere 10 cm betragen. Bei einem Strahldurchmesser von ca. 100 mm am diffraktiven optischen Element 9 kann der Abstand zur Bearbeitungsebene 7 beispielsweise 800 mm betragen.

Es versteht sich, daß die angegebenen Beispiele keine Einschränkung im Sinne der vorliegenden Erfindung darstellen, sondern lediglich bevorzugte Ausführungsbeispiele darstellen, um einen derartiger maskenlos erzeugten Linienfokus 13 zu generieren. Dem Strahlteilerelement 9, in separater Form eines DOE oder auch als kombiniertes multifunktionales DOE oder mit zusätzlich fokussierendem Element, ist die Bearbeitungsebene 7, in Form z. B. einer Bildebene, nachgeordnet.

Das Strahlformerelement 8, z. B. Einzel-DOE, erzeugt erfindungsgemäß die in der Anwendung gewünschte Teilstruktur 12. Das Strahlteilerelement 9, z. B. als Einzel-DOE, vervielfältigt die Teilstruktur 12 und bildet damit den intensitätsstrukturierten Linienfokus 13.

Die Erfindung betrifft auch mindestens ein Verfahren zur Erzeugung eines Lichtstrahles für die Materialbearbeitung, gekennzeichnet dadurch, daß nacheinander eine kohärente Lichtstrahlung erzeugt wird, die danach kollimiert, geformt und derartig geteilt wird, daß der intensitätsstrukturierte Linienfokus 13 entsteht, der auf eine Bearbeitungsebene 7 trifft.

Gegebenenfalls wird in vorteilhafter Weise die kollimierte Lichtstrahlung vor der Formung durch eine Fokussiereinheit geleitet. Als kohärente Lichtquelle wird vorzugsweise ein Single Mode Laser verwendet. In weiteren Ausführungsformen der Erfindung kann aber auch als kohärente Lichtquelle beispielsweise eine Multi-Mode-Lichtquelle oder eine alternative Lichtquelle verwendet werden, die durch geeignete Maßnahmen, wie Wellenlängenfilterung oder ähnliche Filtermaßnahmen, einen ausreichend formbaren kohärenten Lichtstrahl im Sinne der Aufgabe der Erfindung erzeugen kann. In besonderen Ausführungen des Verfahrens werden je nach verwendeter Lichtquelle und Beschaffenheit der Bearbeitungsebene Einzel-DOE mit jeweils separater Strahlformungs- und Strahlteilerfunktion oder ein multifunktionales DOE verwendet, um die Lichtstrahlung 11 zu formen und anschließend in erforderlicher Weise zu teilen. Die Auswahl erfolgt entsprechend der verwendeten kohärenten Lichtquelle und der Beschaffenheit der Bearbeitungsebene auf der ein intensitätsstrukturierter Linienfokus entstehen soll.

Die Eigenschaften des Strahlformer-Prinzips bleiben erhalten. Insbesondere sei hier die vorteilhafte Homogenität genannt. Die Anordnung und das Verfahren sind effizienter, weil kein Licht durch Maskierung verloren geht. Die Vereinfachung der Anordnung und des Verfahrens ergibt sich auch daraus, daß keinerlei Projektionsoptik zur Erzeugung des strukturierten Linienfokus notwendig sind.

Es ist trotzdem möglich, daß in bestimmten Anwendungen die zusätzliche Verwendung einer Maske und/oder eines Projektionsobjektivs erfolgen kann. In Fig. 5 ist eine Weiterbildung der erfindungsgemäßen Anordnung 10 gemäß Fig. 1 gezeigt, wobei gleiche Elemente mit gleichen Bezugszeichen bezeichnet sind und zu deren Beschreibung auf die obigen Ausführungen verwiesen wird. Bei der Ausführungsform gemäß Fig. 5 ist eine Maske 5 vorgesehen. In der Ebene der Maske 5 wird in gleicher Weise wie bei der Ausführungsform gemäß Fig. 1 der intensitätsstrukturierte Linienfokus erzeugt, der hier nun mittels der Maske 5 weiter strukturiert wird. Beispielsweise kann die Kantensteilheit der Teilstrukturen 12' verbessert werden.

Der Maske 5 ist eine Projektionsoptik 6 nachgeordnet, die die Maske 5 und somit den durch die Maske 5 weiterstrukturierten Linienfokus auf die Bearbeitungsebene 7 abbildet.

## Patentansprüche

1. Anordnung zur Erzeugung eines Lichtstrahles für die Materialbearbeitung, mit
einer Lichtquelle (1), die einen Lichtstrahl (11) abgibt,
einer der Lichtquelle (1) nachgeordneten Strahlformungsoptik (14), die den Lichtstrahl (11) mit einer vorbestimmten Zielstrukturierung in eine Bearbeitungsebene (7) abbildet,
wobei die Strahlformungsoptik (14) zur Erzeugung der Zielstrukturierung eine Strahlteilerfunktion aufweist, **dadurch gekennzeichnet, dass** die Strahlformungsoptik (14) als vorbestimmte Zielstrukturierung einen Linienfokus (13) erzeugt, der in seiner Längsrichtung intensitätsstrukturiert ist, wobei der Linienfokus (13) in seiner Längsrichtung lokal unterbrochen ist.

2. Anordnung nach Anspruch 1, **dadurch gekennzeichnet, dass** die Strahlformungsoptik (14) ein erstes diffraktives optisches Element (9) zur Verwirklichung der Strahlteilerfunktion aufweist.

3. Anordnung nach Anspruch 2, **dadurch gekennzeichnet, dass** das erste diffraktive optische Element (9) als Phasengitter ausgebildet ist.

4. Anordnung nach einem der obigen Ansprüche, **dadurch gekennzeichnet, dass** die Strahlformungsoptik (14) eine Teilstruktur (12) der vorbestimmten Zielstrukturierung erzeugt, wobei die Teilstrukturen (12) mittels der Strahlteilerfunktion der Strahlformungsoptik vervielfältigt wird.

5. Anordnung nach einem der obigen Ansprüche, **dadurch gekennzeichnet, dass** die Strahlformungsoptik (14) neben der Strahlteilerfunktion eine strahlformende Funktion aufweist.

6. Anordnung nach Anspruch 5, **dadurch gekennzeichnet, dass** die Strahlformungsoptik (14) ein zweites diffraktives optisches Element (8) zur Verwirklichung der strahlformenden Funktion aufweist.

7. Anordnung nach Anspruch 6, **dadurch gekennzeichnet, dass** das erste und zweite diffraktive optische Element als ein einziges Element verwirklicht sind.

8. Anordnung nach Anspruch 6, **dadurch gekennzeichnet, dass** das erste und zweite diffraktive optische Element (9, 8) unterschiedliche diffraktive optische Elemente sind.

9. Anordnung nach einem der obigen Ansprüche, **dadurch gekennzeichnet, dass** die Strahlformungsoptik (14) eine der Lichtquelle (1) nachgeordnete Kollimatoreinheit (2) und eine der Kollimatoreinheit (2) nachgeordnete Strahlaufbereitungseinheit (3, 8, 9) aufweist, wobei die Strahlaufbereitungseinheit (3, 8, 9) die Strahlteilerfunktion sowie eine fokussierend und eine strahlformende Funktion aufweist.

10. Anordnung nach Anspruch 9, **dadurch gekennzeichnet, dass** die Strahlaufbereitungseinheit (3, 8, 9) aus einer Fokussiereinheit (3), einer Strahlformungseinheit (8) und einer Strahlteilereinheit (9) besteht.

11. Anordnung nach einem der obigen Ansprüche, **dadurch gekennzeichnet, dass** die Lichtquelle (1) einen Single Mode Laser aufweist.

12. Verfahren zur Erzeugung eines Lichtstrahles für die Materialbearbeitung, bei dem eine kohärente Lichtstrahlung erzeugt, kollimiert, geformt und auf eine Bearbeitungsebene abgebildet wird, wobei die Lichtstrahlung vor der Bearbeitungsebene noch so geteilt wird, dass ein Lichtstrahl mit einer vorbestimmten Zielstrukturierung auf die Bearbeitungsebene trifft, **dadurch gekennzeichnet, dass** einzelne diffraktive optische Elemente mit jeweils separater Strahlformungs- und Strahlteilerfunktion verwendet werden, die die Lichtstrahlung formen und anschließend teilen, so dass entsprechend der verwendeten kohärenten Lichtquelle und der Beschaffenheit der Bearbeitungsebene ein intensitätsstrukturierter Linienfokus entsteht, wobei der Linienfokus (13) in seiner Längsrichtung lokal unterbrochen ist.

13. Verfahren nach Anspruch 12, **dadurch gekennzeichnet, dass** vor der Formung der kollimierten Lichtstrahlung eine Fokussierung erfolgt.

## Claims

1. Arrangement for producing a light beam for material processing, having
a light source (1), which outputs a light beam (11),
a beam-shaping optical unit (14), which is arranged downstream of the light source (1) and images the light beam (11) with a predetermined target structuring in a processing plane (7),
wherein the beam-shaping optical unit (14) has a beam splitter function for producing the target structuring, **characterized in that** the beam-shaping optical unit (14) produces, as a predetermined target structuring, a line focus (13), which is intensity-structured in its longitudinal direction, wherein the line focus (13) is locally interrupted in its longitudinal direction.

2. Arrangement according to claim 1, **characterized in that** the beam-shaping optical unit (14) has a first diffractive optical element (9) for implementing the beam splitter function.

3. Arrangement according to Claim 2, **characterized in that** the first diffractive optical element (9) is embodied as a phase grating.

4. Arrangement according to one of the above claims, **characterized in that** the beam-shaping optical unit (14) produces a partial structure (12) of the predetermined target structuring, wherein the partial structure (12) is replicated using the beam splitter function of the beam-shaping optical unit.

5. Arrangement according to one of the above claims, **characterized in that** the beam-shaping optical unit (14) has, in addition to the beam splitter function, a beam-shaping function.

6. Arrangement according to Claim 5, **characterized in that** the beam-shaping optical unit (14) has a second diffractive optical element (8) for implementing the beam-shaping function.

7. Arrangement according to Claim 6, **characterized in that** the first and second diffractive optical elements are implemented as a single element.

8. Arrangement according to Claim 6, **characterized in that** the first and second diffractive optical elements (9, 8) are different diffractive optical elements.

9. Arrangement according to one of the above claims, **characterized in that** the beam-shaping optical unit (14) has a collimator unit (2) arranged downstream of the light source (1) and a beam conditioning unit (3, 8, 9) arranged downstream of the collimator unit (2), wherein the beam conditioning unit (3, 8, 9) has the beam splitter function and also a focusing and a beam-shaping function.

10. Arrangement according to Claim 9, **characterized in that** the beam conditioning unit (3, 8, 9) consists of a focusing unit (3), a beam-shaping unit (8) and a beam splitter unit (9).

11. Arrangement according to one of the above claims, **characterized in that** the light source (1) has a single mode laser.

12. Method for producing a light beam for material processing, in which coherent light radiation is produced, collimated, shaped and imaged onto a processing plane, wherein the light radiation is split upstream of the processing plane such that a light beam with a predetermined target structuring is incident on the processing plane, **characterized in that** individual diffractive optical elements having in each case separate beam-shaping and beam splitter functions are used, which elements shape the light radiation and subsequently split it, such that an intensity-structured line focus is produced in accordance with the coherent light source used and the nature of the processing plane, wherein the line focus (13) is locally interrupted in its longitudinal direction.

13. Method according to Claim 12, **characterized in that** focusing is performed before the shaping of the collimated light radiation.

## Revendications

1. Arrangement pour générer un rayon lumineux pour le traitement de matériau, comprenant une source de lumière (1) qui délivre un rayon lumineux (11),
une optique de mise en forme de faisceau (14) disposée en aval de la source de lumière qui représente le rayon lumineux (11) avec une structuration cible prédéfinie dans un plan de traitement (7),
l'optique de mise en forme de faisceau (14) possédant une fonction de diviseur de faisceau pour produire la structuration cible, **caractérisé en ce que** l'optique de mise en forme de faisceau (14) produit, en tant que structuration cible prédéfinie, un foyer linéaire (13) qui est structuré en intensité dans sa direction longitudinale, le foyer linéaire (13) étant interrompu localement dans sa direction longitudinale.

2. Arrangement selon la revendication 1, **caractérisé en ce que** l'optique de mise en forme de faisceau (14) possède un premier élément optique diffractif (9) destiné à accomplir la fonction de diviseur de faisceau.

3. Arrangement selon la revendication 2, **caractérisé en ce que** le premier élément optique diffractif (9) est réalisé sous la forme d'un réseau de phase.

4. Arrangement selon l'une des revendications précédentes, **caractérisé en ce que** l'optique de mise en forme de faisceau (14) produit une structure partielle (12) de la structuration cible prédéfinie, les structures partielles (12) étant dupliquées au moyen de la fonction de diviseur de faisceau de l'optique de mise en forme de faisceau.

5. Arrangement selon l'une des revendications précédentes, **caractérisé en ce que** l'optique de mise en forme de faisceau (14), outre la fonction de diviseur de faisceau, possède une fonction de formage de faisceau.

6. Arrangement selon la revendication 5, **caractérisé en ce que** l'optique de mise en forme de faisceau (14) possède un deuxième élément optique diffractif (8) destiné à accomplir la fonction de formage de faisceau.

7. Arrangement selon la revendication 6, **caractérisé en ce que** le premier et le deuxième élément optique diffractif sont réalisés sous la forme d'un élément unique.

8. Arrangement selon la revendication 6, **caractérisé en ce que** le premier et le deuxième élément optique diffractif (9, 8) sont des éléments optiques diffractifs différents.

9. Arrangement selon l'une des revendications précédentes, **caractérisé en ce que** l'optique de mise en forme de faisceau (14) possède une unité formant collimateur (2) disposée à la suite de la source de lumière (1) et une unité de conditionnement de faisceau (3, 8, 9) disposée à la suite de l'unité formant collimateur (2), l'unité de conditionnement de faisceau (3, 8, 9) possédant la fonction de diviseur de faisceau ainsi qu'une fonction de focalisation et une fonction de formage de faisceau.

10. Arrangement selon la revendication 9, **caractérisé en ce que** l'unité de conditionnement de faisceau (3, 8, 9) se compose d'une unité de focalisation (3), d'une unité de mise en forme de faisceau (8) et d'une unité de diviseur de faisceau (9) .

11. Arrangement selon l'une des revendications précédentes, **caractérisé en ce que** la source de lumière (1) possède un laser monomodal.

12. Procédé pour générer un rayon lumineux pour le traitement de matériau, selon lequel un rayonnement lumineux cohérent est généré, collimaté, mis en forme et représenté sur un plan de traitement, le rayonnement lumineux étant encore divisé avant le plan de traitement de telle sorte qu'un rayon lumineux ayant une structuration cible prédéfinie soit incident sur le plan de traitement, **caractérisé en ce que** des éléments optiques diffractifs individuels ayant des fonctions de mise en forme et de diviseur de faisceau respectivement séparées sont utilisés, lesquels mettent en forme et ensuite divisent le rayonnement lumineux, de sorte qu'il se produit un foyer linéaire structuré en intensité conformément à la source de lumière cohérente utilisée et à la nature du plan de traitement, le foyer linéaire (13) étant interrompu localement dans sa direction longitudinale.

13. Procédé selon la revendication 12, **caractérisé en ce qu'**une focalisation est effectuée avant la mise en forme du rayonnement lumineux collimaté.
